# EUROPÄISCHE PATENTANMELDUNG

(11) **EP 1 992 466 A2**
(43) Veröffentlichungstag der Anmeldung: **19.11.2008**
(21) Anmeldenummer: 08009161.4
(22) Anmeldetag: 17.05.2008
(51) Int. Cl.: B29B 7/76

(54) **Verfahren und Vorrichtung zur Herstellung eines Polyurethans aus zwei unter hohem Druck stehenden Ausgangskomponenten**

(30) Priorität: 18.05.2007 DE 102007023239
(71) Anmelder: FRIMO Group GmbH, 49504 Lotte (DE)
(72) Erfinder: Armin, Daniel, 63741 Aschaffenburg (DE); Kasper, Sem., 63457 Hanau (DE)
(74) Vertreter: Moldenhauer, Herbert

(57) **Zusammenfassung**

Ein Verfahren und eine Vorrichtung zur Herstellung eines Polyurethans aus zumindest zwei stehenden Ausgangskomponenten, bei dem die Ausgangskomponenten aus entgegengesetzten Richtungen kommend unter hohem Druck in eine Mischkammer (1) eingespritzt, miteinander vermischt, zur chemischen Reaktion gebracht und aus der Austrittsöffnung der Mischkammer ausgestoßen werden, wobei die Komponenten in der Mischkammer (1) in einem Abstand voneinander auf eine Prallwand (2) auftreffend gegeneinander gerichtet, miteinander vermischt, zur Austrittsöffnung (3) gefördert und aus dieser ausgestoßen werden.

## Beschreibung

### Technisches Gebiet

Die Erfindung betrifft ein Verfahren und eine Vorrichtung zur Herstellung eines Polyurethans aus zumindest zwei flüssigen Ausgangskomponenten, bei dem , die Ausgangskomponenten aus entgegengesetzten Richtungen kommend unter hohem Druck in eine Mischkammer eingespritzt, miteinander vermischt, zur chemischen Reaktion gebracht und aus der Austrittsöffnung der Mischkammer ausgestoßen werden. Eine solche Vorrichtung wird geläufig auch als Mischkopf bezeichnet.

### Stand der Technik

Ein solches Verfahren und eine zu seiner Durchführung geeignete Vorrichtung ist aus der WO 2004/004879 A1 bekannt. Die aus den Mündungen der Einspritzdüsen unter hohem Druck in die Mischkammer eingespritzten Komponenten werden dabei im Zentrum der Mischkammer unmittelbar aufeinandertreffend aufeinander ausgerichtet, um eine möglichst intensive Verwirbelung und Durchmischung der Komponenten miteinander zu erreichen und als Folge davon eine möglichst homogene, chemische Reaktion der Komponenten miteinander.

### Darstellung der Erfindung

Der Erfindung liegt die Aufgabe zu Grunde, ein solches Verfahren und eine zu seiner Durchführung geeignete Vorrichtung zu zeigen, die es ermöglicht die gegenseitige Durchmischung der Komponenten in der Mischkammer noch homogener zu gestalten.

Diese Aufgabe wird erfindungsgemäß bei einem Verfahren nach dem Oberbegriff durch die kennzeichnenden Merkmale von Anspruche 1 gelöst sowie bei einer zur Durchführung des Verfahrens geeigneten Vorrichtung nach Anspruch 6. Auf vorteilhafte Weiterbildungen nehmen die jeweils darauf rückbezogenen Unteransprüche Bezug.

Bei dem erfindungsgemäßen Verfahren zur Herstellung eines Polyurethans Verfahren zur Herstellung eines Polyurethans aus zumindest zwei flüssigen Ausgangskomponenten, bei dem die Ausgangskomponenten aus entgegengesetzten Richtungen kommend unter hohem Druck in eine Mischkammer eingespritzt, miteinander vermischt, zur chemischen Reaktion gebracht und aus der Austrittsöffnung der Mischkammer ausgestoßen werden, wobei die Komponenten in der Mischkammer in einem Abstand voneinander auf eine Prallwand auftreffend, gegeneinander gerichtet, miteinander vermischt, zur Austrittsöffnung gefördert und aus dieser ausgestoßen werden.

Die die Komponenten bildenden Strahlen treffen somit nicht mehr im freien Raum der Mischkammer unmittelbar aufeinander, sondern erst nach Ihrer Zerstäubung an der Prallwand in bereits fein verteilter Form. Die dabei freigesetzten Energien resultieren aus dem Aufprall der beiden Komponenten auf die Prallwand, der Zerstäubung und gegenseitigen Durchmischung in feinstverteilter Form sowie aus Reflexions- und Rotationsvorgängen in der verhältnismäßig engen Mischkammer. Hierdurch gelingt eine wesentlich bessere Durchmischung als bisher und als Folge davon die Herstellung eines wesentlich homogeneren Produktes. Die Prallwand ist zwischen den beiden Auftreffpunkten kontinuierlich ineinanderübergehend ausgebildet und weist in der Zwischenzone somit weder Vorsprünge noch nennenswerte Vertiefungen auf, um zu erreichen, dass die feinzerstäubten Komponententröpfchen unmittelbar aufeinandertreffen und miteinander reagieren können.

Als vorteilhaft für die Homogenität der Durchmischung hat es sich erwiesen, wenn die Komponenten unter einem Winkel A von 40 bis 80° auf die Prallwand der Mischkammer auftreffend gegen diese gerichtet werden, bezogen auf eine Ebene, die sich parallel zur Längsachse der Mischkammer 1 erstreckt und der Austrittsöffnung aufspannt und dem Strahl der jeweiligen Komponente.

Die Komponenten können ferner unter einem spitzen Winkel einander entgegengesetzt zur Austrittsrichtung der Austrittsöffnung gegen die Prallwand der Mischkammer gerichtet werden, bezogen auf eine parallel zur Austrittsrichtung der Austrittsöffnung errichtete Ebene. Die gegenseitige Durchwirbelung unter Umkehrung der Richtung gelingt hierdurch besonders gut. Zweckmäßig beträgt der spitze Winkel 20 bis 40 °.

Die Komponenten sollten zweckmäßig in einem Abstand B von 1 bis 6 mm voneinander auftreffend gegen die Prallwand 2 gerichtet werden um in den beim Auftreffen entstehenden Mikrotröpfchen der Komponenten noch eine hinreichend große kinetische Energie für die gegenseitige Verwirbelung zu Verfügung zu haben und die Entstehung von zu großen Tropfen zu vermeiden.

Eine besonders gut zur Durchführung des vorstehend beschriebenen Verfahrens geeignete Vorrichtung umfasst eine Mischkammer, in die zwei einander entgegengerichtete Einspritzdüsen münden und eine Austrittsöffnung wobei die Einspritzdüsen gegen eine ihnen gegenüberliegende Prallwand der Mischkammer gerichtet sind und wobei die in Richtung der Prallwand gedachten Verlängerungen der Einspritzdüsen die Prallwand in einem Abstand B voneinander durchdringen. Der Abstand B beträgt vorteilhaft 1 bis 6 mm.

Die gedachten Verlängerungen der Einspritzdüsen durchschneiden die Prallwand 2 zweckmäßig unter einem Winkel von 10 - 60 °, um hinreichend große Verwirbelungskräfte an der Prallwand zur Verfügung zu haben. Der im Einzelfalle optimale Wert muss in Hinblick auf die Vielfalt der Konsistenzen der einsetzbaren Komponenten empirisch ermittelt werden, bereitet dem Fachmann aber in Hinblick auf die Lehre der Erfindung keinen unzumutbar großen Aufwand.

Als vorteilhaft hat es sich bewährt, wenn die gedachten Verlängerungen der Einspritzdüsen mit der in die Mischkammer gedachten Verlängerung der Austrittsöffnung einen spitzen Winkel C einschließen, wobei der spitze Winkel C der Austrittsrichtung der Austrittsöffnung entgegengesetzt zugeordnet sein kann, um die Verwirbelung weiter zu verbessern. Der Winkel C kann 20 bis 40 ° betragen.

Die Prallwand kann einen Bestandteil der Stirnfläche eines Stellkolbens bilden, der zwischen einer die Mündungen der Einspritzdüsen überdeckenden und einer die Mündungen der Einspritzdüsen freigebenden Stellung hin- und herbewegbar ist. Dies erleichtert es, Rückstände der Komponenten unter Vermeidung des Einsatzes von Lösungsmitteln weitgehend und mechanisch zu beseitigen

Die Prallwand kann dabei in der die Mündungen der Einspritzdüsen überdeckenden Stellung eine Zylinderfläche einer Bohrung ineinanderübergehend ergänzen, die in die Austrittsöffnung mündet. Dadurch ergibt sich eine deutliche Vergrößerung der Flächen, die mechanisch gereinigt werden können, insbesondere, wenn die Bohrung und die Austrittsöffnung ineinanderübergehend ausgebildet sind und denselben Innendurchmesser haben.

Dabei ist von Vorteil, wenn in der Bohrung ein Reinigungskolben aufgenommen ist, der zwischen einer die Prallwand und Mischkammer freigebenden und einer die Austrittsöffnung ausfüllenden Stellung hin- und herbewegbar ist. Sowohl die Mischkammer als auch die Bohrung und die Austrittsöffnung lassen sich bei einer solchen Ausgestaltung vollständig mit dem nacheinander jeweils in die jeweils vorderste Stellung überführten Stell- und Reinigungskolben ausfüllen, was gewährleistet, dass sämtliche eventuellen Rückstände der Komponenten oder des daraus gebildeten Polyurethans vollständig ausgetragen werden und keiner gesonderten Reinigung bedürfen.

Als vorteilhaft hat es sich bewährt, wenn die gedachten Verlängerungen der Einspritzdüsen der Prallwand symmetrisch auftreffend zugeordnet sind. Die gegenseitige Durchmischung der Komponenten gelingt dann besonders gut.

### Kurzbeschreibung der Zeichnung

Eine beispielhafte Ausführung der Erfindung ist in der beiliegenden Zeichnung dargestellt. Sie wird nachfolgend näher erläutert.

Es zeigen:
Fig. 1 eine zur Durchführung des Verfahrens geeignete Vorrichtung in längsgeschnittener Darstellung
Fig. 2 einen Ausschnitt aus der Vorrichtung nach Fig. 1 in quergeschnittener Darstellung
Fig. 3 die Vorrichtung nach Fig. 1 in quergeschnittener Darstellung zur Verdeutlichung der Ausrichtung der Einspitzdüsen, bezogen auf die Querebene
Fig. 4 die Vorrichtung nach Fig. 1 in teilweise längsgeschnittener Darstellung zur Verdeutlichung der Ausrichtung der Einspritzdüsen, bezogen auf die Längsebene

### Ausführung der Erfindung

Nachfolgend wird die Durchführung des erfindungsgemäßen Verfahrens zur Herstellung eines Polyurethans aus zumindest zwei flüssigen Ausgangskomponenten, bei dem die Ausgangskomponenten aus entgegengesetzten Richtungen kommend unter hohem Druck in eine Mischkammer 1 eingespritzt, miteinander vermischt, zur chemischen Reaktion gebracht und aus der Austrittsöffnung der Mischkammer ausgestoßen werden, wobei die Komponenten in der Mischkammer 1 in einem Abstand voneinander auf eine Prallwand 2 auftreffend gegeneinander gerichtet, miteinander vermischt, zur Austrittsöffnung 3 gefördert und aus dieser ausgestoßen werden.

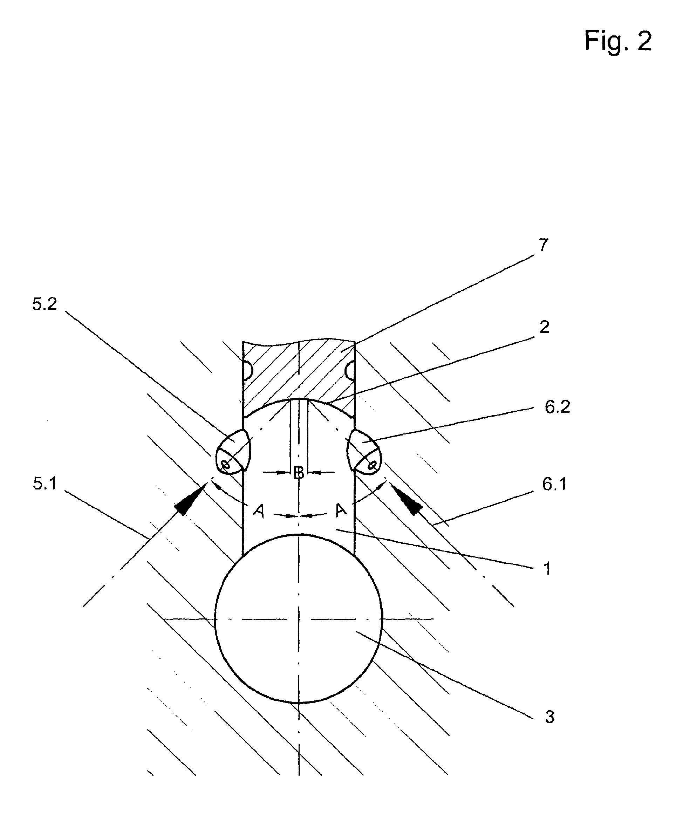

In Hinblick auf die Verbesserung der Homogenität des dabei erhaltenen Polyurethans und damit zugleich der Qualität der daraus erzeugten Produkte ist es vorgesehen, dass die Komponenten in der Mischkammer 1 in einem Abstand B voneinander auf eine Prallwand 2 auftreffend gegeneinander gerichtet, miteinander vermischt und dann aus der Austrittsöffnung 3 ausgestoßen werden, wie in Fig. 2 gezeigt.

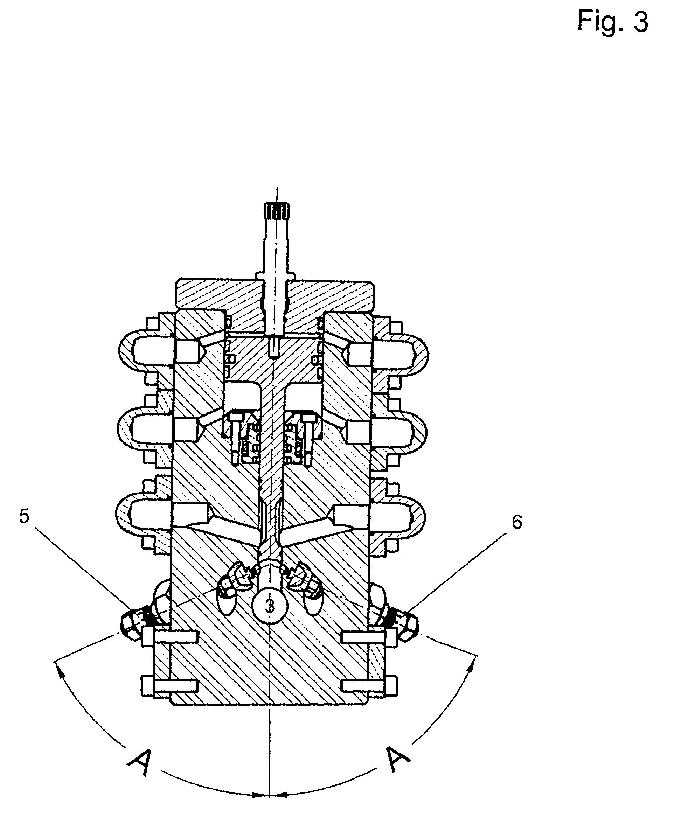

Die Komponenten werden dass die Komponenten unter einem Winkel A von 40 bis 80° auf die Prallwand 2 der Mischkammer 1 auftreffend gegen diese gerichtet werden, bezogen auf eine Ebene, die sich parallel zur Längsachse der Mischkammer 1 erstreckt und der Austrittsöffnung 3 aufspannt und dem Strahl der jeweiligen Komponente, wie in Fig. 2 und 3 gezeigt.

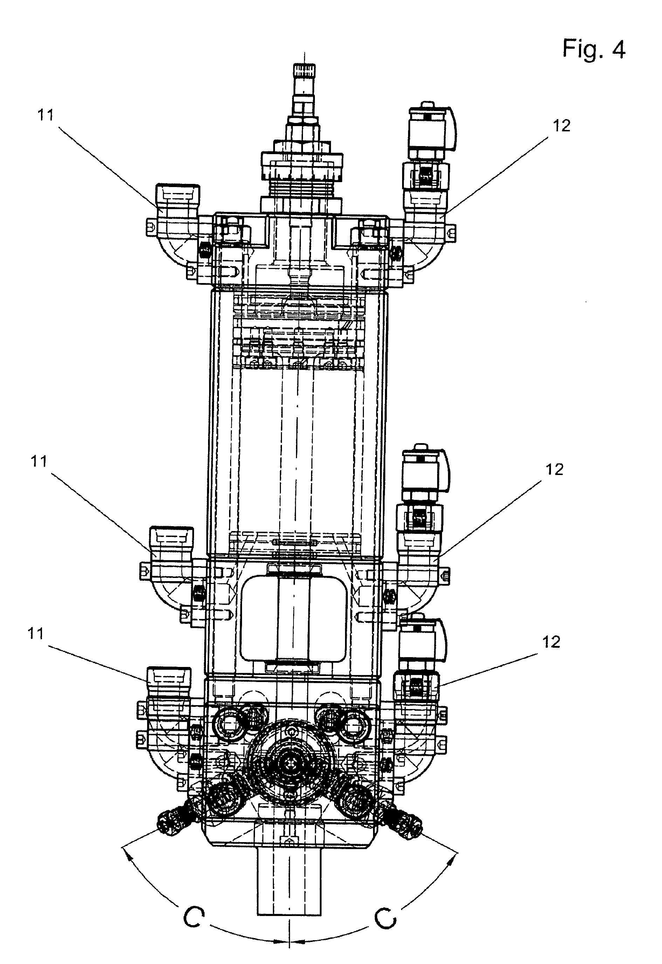

Die Komponenten werden zusätzlich unter einem spitzen Winkel C, entgegengesetzt zur Austrittsrichtung 4 der Austrittsöffnung 3, gegen die Prallwand 2 der Mischkammer 1 gerichtet, bezogen auf eine parallel zur Austrittsrichtung 4 der Austrittsöffnung 3 errichtete, gedachte Ebene, wie in Fig. 4 gezeigt. Der spitze Winkel beträgt dabei 20 bis 40° und hängt hinsichtlich des Optimums maßgeblich ab vom Fließvolumen und der Konsistenz der eingesetzten Komponenten. Der Abstand B, in dem die Komponenten auf die Prallwand auftreffen beträgt 1 bis 6 mm und hängt hinsichtlich des Optimums ebenfalls maßgeblich von der Konsistenz und dem Mischungsvolumen der Komponenten ab.

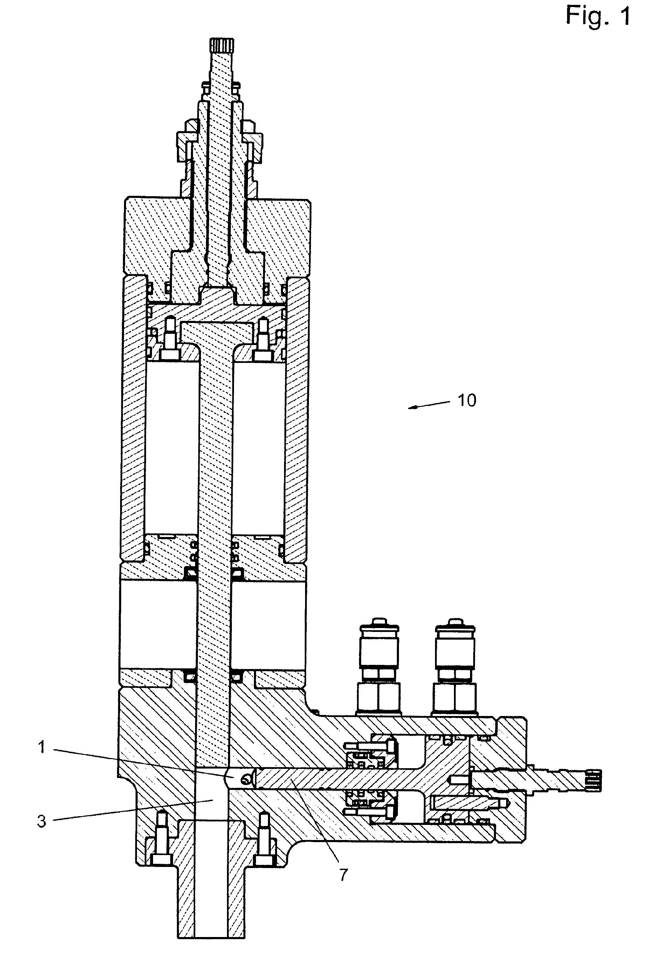

Die in den Figuren 1 bis 4 gezeigte Vorrichtung umfasst ein Gehäuse 10 mit den Einspritzdüsen 5, 6, einer Auslassöffnung 3 und weiteren Anschlüssen 11 und Austritten 12 für Hydrauliköl. Eine solche Vorrichtung kann als Mischkopf bezeichnet werden und ist insgesamt leicht austauschbar, um die unterschiedlichsten Komponenten in optimaler Weise zu vermischen und verarbeiten zu können.

Das Gehäuse enthält, wie in Fig. 1 gezeigt, eine Mischkammer 1, die durch eine sich quer zur Austrittsöffnung 3 erstreckende Bohrung gebildet ist und letztere unter einem Wnkel von 90 ° einmündet.

In die Mischkammer 1 münden zumindest die beiden Einspritzdüsen 5, 6 für das Polyol und das Di-Isoyanat, wobei die Einspritzdüsen 5, 6 gegen eine ihnen gegenüberliegende Prallwand 2 der Mischkammer 1 gerichtet sind und wobei die in Richtung der Prallwand 2 gedachten Verlängerungen 5.1, 6.1 der Einspritzdüsen 5, 6 die Prallwand 2 in einem Abstand B voneinander durchdringen. Der Abstand B beträgt bei dem Ausführungsbeispiel 4,8 mm.

Die gedachten Verlängerungen 5.1, 6.1 der Einspritzdüsen 5, 6 durchschneiden die Prallwand 2 unter einem Winkel A von 10 - 60 °, vorliegend unter einem Winkel von 40° wie in Fig. 3 gezeigt.

Die gedachten Verlängerungen 5.1, 6.1 der Einspritzdüsen 5, 6 schließen mit der in die Mischkammer 1 gedachten Verlängerung der Austrittsöffnung 3 einen spitzen Winkel C ein, der der Austrittsrichtung 4 der Austrittsöffnung 3 entgegengesetzt zugeordnet ist. Der Winkel C beträgt in dem Ausführungsbeispiel 75 °, wie in Fig. 4 gezeigt.

Fig. 2 zeigt, dass die Prallwand 2 einen Bestandteil der Stirnfläche eines Stellkolbens 7 bildet, der zwischen einer die Mündungen 5.2, 6.2 der Einspritzdüsen 5, 6 überdeckenden und einer die Mündungen 5.2, 6.2 der Einspritzdüsen 5, 6 freigebenden Stellung hin- und herbewegbar ist.

Die Prallwand 2 ergänzt in der die Mündungen 5.2, 6.2 der Einspritzdüsen 5, 6 überdeckenden Stellung des Stellkolbens 7 eine Zylinderfläche 8.1 einer Bohrung 8 ineinanderübergehend, die in die Austrittsöffnung 3 mündet.

Die Bohrung 8 und die Austrittsöffnung 3 sind ineinanderübergehend ausgebildet sind und haben denselben Innendurchmesser.

In der Bohrung 8 ist ein signalbetätigbarer Reinigungskolben 9 aufgenommen, der durch die Einleitung von Druckluft zwischen einer die Prallwand 2 und Mischkammer 1 freigebenden und einer die Austrittsöffnung 3 ausfüllenden Stellung hin- und herbewegbar ist. In der Mischkammer 1 und der Bohrung zurückbleibende Reste der Komponenten oder des daraus gebildeten Polyurethans lassen sich dadurch mechanisch entfernen, ohne dass es des Einsatzes von Lösungsmitteln bedarf. Zweckmäßig werden sowohl der Stellkolben 7 als auch der Reinigungskolben 9 nach dem Abschluss eines m jeden Mischvorgangs betätigt, wodurch bei der erneuten Inbetriebnahme des Mischkopfes wie eine völlig saubere Mischkammer und saubere Austragsorgane verfügbar sind.

In allen Fig. wird gezeigt, dass die gedachten Verlängerungen 5.1, 6.1 der Einspritzdüsen 5, 6 der Prallwand 2 symmetrisch auftreffend zugeordnet sind. Damit werden die besten Erfolge erzielt.

Die gezeigte Vorrichtung und das darin angewandte Verfahren gewährleisten eine optimale Durchmischung der zur Herstellung von Polyurethanformteilen benötigten Ausgangskomponenten und damit bei sparsamstem Werkstoffverbrauch eine kontinuierlich gleichbleibende und sehr hohe Qualität der Polyurethanformteile. Die Vorrichtung ist mechanisch selbstreinigend ausgebildet. Zur Reinigung bedarf es insoweit keines besonderen Arbeitsaufwands, chemischen Lösungsmittel oder aufwändiger Sekundärenenergien wie z.B. Druckluft. Dabei ist es von besonderem Vorteil, dass die hohe Werkstückqualität auch dann erreicht wird, wenn die jeweiligen Mischvorgänge nur sehr kurze Zeit in Anspruch nehmen, beispielsweise in Bezug auf die Herstellung von sehr kleinen Schaumformteilen aus Polyurethan.

## Patentansprüche

1. Verfahren zur Herstellung eines Polyurethans aus zumindest zwei flüssigen Ausgangskomponenten, bei dem die Ausgangskomponenten aus entgegengesetzten Richtungen kommend unter hohem Druck in eine Mischkammer (1) eingespritzt, miteinander vermischt, zur chemischen Reaktion gebracht und aus der Austrittsöffnung der Mischkammer ausgestoßen werden, **dadurch gekennzeichnet, dass** die Komponenten in der Mischkammer (1) in einem Abstand voneinander auf eine Prallwand (2) auftreffend, gegeneinander gerichtet, miteinander vermischt, zur Austrittsöffnung (3) gefördert und aus dieser ausgestoßen werden.

2. Verfahren nach Anspruch 1, **dadurch gekennzeichnet, dass** die Komponenten unter einem Winkel A von 40 bis 80° auf die Prallwand (2) der Mischkammer (1) auftreffend gegen diese gerichtet werden, bezogen auf eine Ebene, die sich parallel zur Längsachse der Mischkammer (1) erstreckt und der Austrittsöffnung (3) aufspannt und dem Strahl der jeweiligen Komponente.

3. Verfahren nach Anspruch 1 oder 2, **dadurch gekennzeichnet, dass** die Komponenten unter einem spitzen Winkel C, entgegengesetzt zur Austrittsrichtung (4) der Austrittsöffnung (3), gegen die Prallwand (2) der Mischkammer (1) gerichtet werden, bezogen auf eine parallel zur Austrittsrichtung (4) der Austrittsöffnung (3) errichtete, gedachte Ebene.

4. Verfahren nach Anspruch 3 **dadurch gekennzeichnet, dass** der spitze Winkel C 20 bis 40 ° beträgt.

5. Verfahren nach einem der Ansprüche 1 bis 4, **dadurch gekennzeichnet, dass** die Komponenten in einem Abstand B von 1 bis 6 mm voneinander auftreffend gegen die Prallwand (2) gerichtet werden.

6. Vorrichtung zur Durchführung des Verfahrens nach einem der Ansprüche 1 bis 5, umfassend eine Mischkammer (1), in die zwei einander entgegengerichtete Einspritzdüsen (5, 6) münden und eine Austrittsöffnung (3), **dadurch gekennzeichnet, dass** die Einspritzdüsen (5, 6) gegen eine ihnen gegenüberliegende Prallwand (2) der Mischkammer (1) gerichtet sind und dass die in Richtung der Prallwand (2) gedachten Verlängerungen (5.1, 6.1) der Einspritzdüsen (5, 6) die Prallwand (2) in einem Abstand B voneinander durchdringen.

7. Vorrichtung nach Anspruch 6, **dadurch gekennzeichnet, dass** der Abstand B 1 bis 6 mm beträgt.

8. Vorrichtung nach Anspruch 6 oder 7, **dadurch gekennzeichnet, dass** die gedachten Verlängerungen (5.1, 6.1) der Einspritzdüsen (5, 6) die Prallwand (2) unter einem Winkel von 10 - 60 ° durchschneiden.

9. Vorrichtung nach einem der Ansprüche 6 bis 8, **dadurch gekennzeichnet, dass** die gedachten Verlängerungen (5.1, 6.1) der Einspritzdüsen (5, 6) mit der in die Mischkammer (1) gedachten Verlängerung der Austrittsöffnung (3) einen spitzen Winkel C von 20 bis 40 ° einschließen.

10. Vorrichtung nach einem der Ansprüche 6 bis 9, **dadurch gekennzeichnet, dass** der spitze Winkel C der Austrittsrichtung (4) der Austrittsöffnung (3) entgegengesetzt zugeordnet ist.

11. Vorrichtung nach einem der Ansprüche 6 bis 10, **dadurch gekennzeichnet, dass** die Prallwand (2) einen Bestandteil der Stirnfläche eines Stellkolbens (7) bildet, der zwischen einer die Mündungen (5.2, 6.2) der Einspritzdüsen (5, 6) überdeckenden und einer die Mündungen (5.2, 6.2) der Einspritzdüsen (5, 6) freigebenden Stellung hin- und herbewegbar ist.

12. Vorrichtung nach Anspruche 11, **dadurch gekennzeichnet, dass** die Prallwand (2) in der die Mündungen (5.2, 6.2) der Einspritzdüsen (5, 6) überdeckenden Stellung eine Zylinderfläche (8.1) einer Bohrung (8) ineinanderübergehend ergänzt, die in die Austrittsöffnung (3) mündet.

13. Vorrichtung nach Anspruch 12, **dadurch gekennzeichnet, dass** die Bohrung (8) und die Austrittsöffnung (3) ineinanderübergehend ausgebildet sind und denselben Innendurchmesser haben.

14. Vorrichtung nach Anspruch 13, **dadurch gekennzeichnet, dass** in der Bohrung (8) ein Reinigungskolben (9) aufgenommen ist, der zwischen einer die Prallwand (2) und Mischkammer (1) freigebenden und einer die Austrittsöffnung (3) ausfüllenden Stellung hin- und herbewegbar ist.

15. Vorrichtung nach einem der Ansprüche 6 bis 14, **dadurch gekennzeichnet, dass** die gedachten Verlängerungen (5.1, 6.1) der Einspritzdüsen (5, 6) der Prallwand (2) symmetrisch auftreffend zugeordnet sind.
